# EUROPEAN PATENT APPLICATION

(11) **EP 3 451 435 A1**
(43) Date of publication of application: **06.03.2019**
(21) Application number: 16900367.0
(22) Date of filing: 26.04.2016
(51) Int. Cl.: H01M 10/0585, H01M 2/34, H01M 4/13, H01M 10/0562, H01M 10/0565

(54) **ALL-SOLID-STATE SECONDARY BATTERY**

(71) Applicant: Hitachi Zosen Corporation, Osaka-shi, Osaka 559-8559 (JP)
(72) Inventor: FUKUI, Hideyuki, Osaka 559-8559 (JP); RYOU, Shiken, Osaka 559-8559 (JP); TAKANO Yasushi, Osaka 559-8559 (JP); OKAMOTO Kenji, Osaka 559-8559 (JP)
(74) Representative: Grünecker Patent- und Rechtsanwälte PartG mbB
(86) International application number: PCT/JP2016/062974
(87) International publication number: WO 2017/187494

(57) **Abstract**

An all-solid-state secondary battery (1) includes a first electrode body (10) having a first current collector (11) and a first electrode layer (14), a second electrode body (30) having a second current collector (31) and a second electrode layer (34), and a solid-electrolyte layer (20) disposed between the electrode layers (14) and (34). On the edge of the first current collector (11), a first insulating member (12) is provided via a first bonding layer (2). On the edge of the second current collector (31) , a second insulating member (32) is provided via a second bonding layer (3). The side end face of the solid-electrolyte layer (20) is disposed outside at least one of the side end faces of the first electrode layer (14) and the second electrode layer (34). The bonding layers (2), (3), and (4) are separated from the respective inner side ends of the insulating members (12) and (32) such that each of the current collectors has a deformable distortion buffering area (16) or (36).

## Description

### Technical Field

The present invention relates to an all-solid-state secondary battery.

### Background Art

In an all-solid-state secondary battery according to the related art, a solid electrolyte is disposed between a positive electrode material and a negative electrode material and current collectors are disposed on the respective outer surfaces of the materials. A method of manufacturing such an all-solid-state secondary battery includes the steps of: spraying a powder material onto a base material with delivery gas while electrically charging the powder material, and depositing the material by an electrostatic force so as to form layers constituting the battery (for example, Patent Literature 1). This method forms a powder layer with an even thickness, so that a uniform pressure is applied over the layer during pressure molding, achieving a high performance all-solid-state secondary battery.

### Citation List

### Patent Literature

Patent Literature 1: Japanese Patent Laid-Open No. 2010-282803

### Summary of Invention

### Technical Problem

Unfortunately, even in the all-solid-state secondary battery obtained by the manufacturing method, internal short-circuits occur quite frequently.

Thus, the inventors have diligently studied and clarified the mechanism of internal short-circuits and completed the present invention.

In the mechanism of internal short-circuits, the powder layer may be laterally extended by a force applied during pressure molding. Specifically, a perpendicular pressure applied to the powder layer generates a maximum stress in the perpendicular direction; meanwhile, a stress is also generated in the transverse direction (extending direction). Since a frictional force is applied during pressurization, the powder layer is not transversely extended. When the powder layer is removed from a press pin at the completion of pressurization, a residual stress is released to transversely extend the powder layer. Since the powder layer and the current collector are pressed in contact with each other, the transverse extension of the powder layer also extends the current collector. The powder layer has the largest thickness and thus a stress generated by the pressurization concentrates on the powder layer, whereas a stress is not hardly generated on an insulating member disposed around the powder layer and thus the insulating member is not deformed. Since the current collector is bonded to the insulating member, a large wrinkle may appear between the edge of the powder layer and a bonded part of the insulating member on the current collector. Such a wrinkle may break a layer structure on the edge of the powder layer, resulting in an internal short-circuit.

In view of the mechanism of internal short-circuits, an object of the present invention is to provide an all-solid-state secondary battery that suppresses the occurrence of internal short-circuits after pressure molding and achieves high performance.

### Solution to Problem

An all-solid-state secondary battery according to the present invention includes: a positive or negative first electrode body having a first composite current collecting member and a first electrode layer; and
a negative or positive second electrode body having a second composite current collecting member and a second electrode layer,
the first composite current collecting member having a plate-like first current collector and a plate-like first insulating member bonded to the edge of a surface of the first current collector via a first bonding layer,
the first electrode layer being stacked on the surface of the first current collector and inside the first insulating member,
the second composite current collecting member having a plate-like second current collector and a plate-like second insulating member bonded to the edge of a surface of the second current collector via a second bonding layer,
the second electrode layer being stacked on the surface of the second current collector and inside the second insulating member,
the all-solid-state secondary battery further including a solid-electrolyte layer disposed between the first electrode layer and the second electrode layer,
the solid-electrolyte layer having a side end face disposed outside at least one of the side end faces of the first electrode layer and the second electrode layer,
the bonding layers being separated from the respective inner side ends of the insulating members such that each of the current collectors has a deformable distortion buffering area.

Moreover, at least one of the first insulating member and the second insulating member preferably has an inner side end in contact with the side end face of the solid-electrolyte layer.

Furthermore, a distance from the side end face of the solid-electrolyte layer to the side end face of one of the first electrode layer and the second electrode layer is preferably up to 6 mm.

Moreover, a clearance between the bonding layer and the inner side end of the insulating member in each of the composite current collecting members preferably ranges from 1 to 15 mm.

The first current collector and the second current collector preferably have roughened surfaces.

The present invention also includes a layered all-solid-state secondary battery including the stacked all-solid-state secondary batteries.

### Advantageous Effect of Invention

According to the all-solid-state secondary battery of the present invention, a wrinkle of the current collector on the edge of the powder layer is dispersed in the distortion buffering area, the wrinkle being caused by a pressure applied to the all-solid-state secondary battery. This configuration can suppress the occurrence of deformation such as a wrinkle on the powder layer, thereby preventing internal short-circuits caused by damage to a layer structure on the edge of the powder layer.

### Brief Description of Drawings

[FIG. 1] FIG. 1 is a cross-sectional view showing an all-solid-state secondary battery according to an embodiment of the present invention.
[FIG. 2] FIG. 2 is a plan view from a first electrode side of the all-solid-state secondary battery.
[FIG. 3] FIG. 3 is a plan view from a second electrode side of the all-solid-state secondary battery.
[FIG. 4] FIG. 4 is a cross-sectional view showing a layered all-solid-state secondary battery including the stacked all-solid-state secondary batteries.
[FIG. 5] FIG. 5 is a partial cross-sectional view showing a state immediately before pressurization in a method of manufacturing the all-solid-state secondary battery according to the embodiment of the present invention.
[FIG. 6] FIG. 6 is a graph showing the charging/discharging curves of the layered all-solid-state secondary battery according to example 2.

### Description of Embodiment

### [Embodiment]

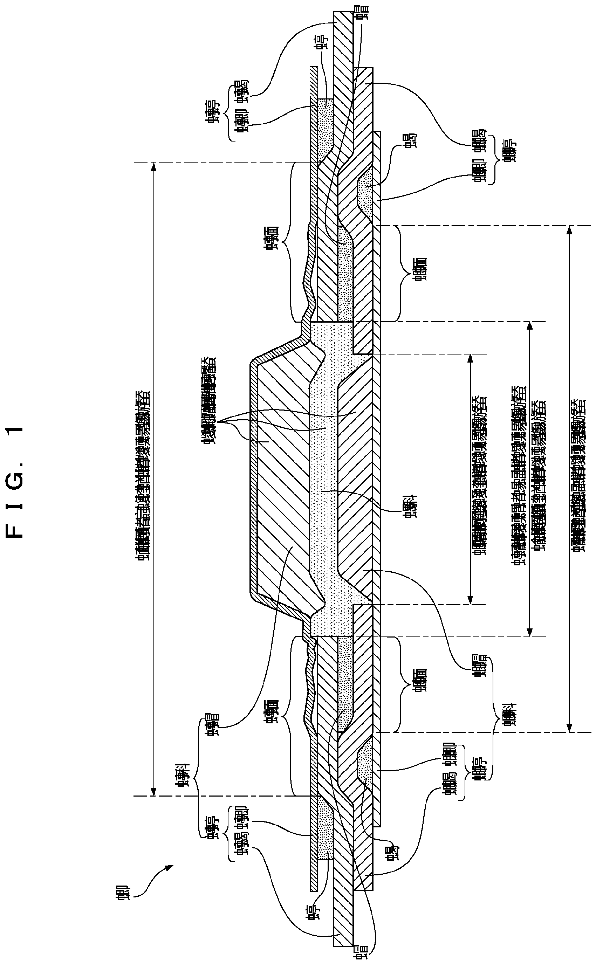

Referring to FIGS. 1 to 4, an embodiment of an all-solid-state secondary battery according to the present invention will be specifically described below.

Roughly speaking, an all-solid-state secondary battery according to the present embodiment includes: a positive or negative first electrode body including a first composite current collecting member having a plate-like first current collector and a plate-like first insulating member bonded to the edge of a surface of the first current collector via a first bonding layer, and a first electrode layer stacked on the surfaces of the first composite current collecting member and the first current collector and inside the first insulating member; a negative or positive second electrode body including a second composite current collecting member having a plate-like second current collector and a plate-like second insulating member bonded to the edge of a surface of the second current collector via a second bonding layer, and a second electrode layer stacked on the surfaces of the second composite current collecting member and the second current collector and inside the second insulating member; and a solid-electrolyte layer disposed between the first and second electrode layers. The solid-electrolyte layer has a side end face disposed outside at least one of the side end faces of the first electrode layer and the second electrode layer, and the bonding layers are separated from the respective inner side ends of the insulating members such that the current collector between the bonding layer and the insulating member has a deformable distortion buffering area that is unfixed to the insulating member.

The structure of the all-solid-state secondary battery will be more specifically described below. In the present embodiment, the all-solid-state secondary battery 1 is a lithium ion secondary battery that is circular in plan view. In the drawings, a first electrode body 10 is placed facedown on a horizontal surface. In the following explanation, the first electrode body 10 serves as a positive electrode and a second electrode body 30 serves as a negative electrode.

As shown in FIG. 1, the all-solid-state secondary battery 1 of the present embodiment includes the first electrode body 10 acting as a positive electrode, a solid-electrolyte layer 20 stacked on the first electrode body 10, and the second electrode body 30 acting as a negative electrode stacked on the solid-electrolyte layer 20.

The first electrode body 10 includes a first composite current collecting member 13 composed of the sheet-type first current collector 11 and a sheet-type first insulating member 12 bonded to the edge of a surface of the first current collector 11, and a first electrode layer 14 stacked on the surfaces of the first composite current 'collecting member 13 and the first current collector 11 and inside the first insulating member 12. Specifically, a first opening 15 for exposing the first current collector 11 is formed at the center of the first composite current collecting member 13. The second electrode body 30 is identical in structure to the first electrode body 10. The second electrode body 30 includes a second composite current collecting member 33 composed of a second insulating member 32 bonded to the edge of a surface of the second current collector 31, and a second electrode layer 34 stacked on the surface of the second composite current collecting member 33 and inside the second current collector 31.

On the edge of the surface of the first current collector (also referred to as a positive-electrode current collector) 11, the first insulating member 12 is disposed with a predetermined width via a first bonding layer 2, constituting the first composite current collecting member (also referred to as a positive-electrode composite current collecting member) 13. Moreover, the first electrode layer (also referred to as a positive-electrode layer) 14 is disposed in the first opening 15 formed at the center of the first composite current collecting member 13, constituting the first electrode body 10.

Furthermore, the solid-electrolyte layer 20 is disposed on the first electrode body 10. The solid-electrolyte layer 20 is formed by applying (disposing) solid electrolyte powder onto the top surface of the first electrode layer 14 in the first electrode body 10.

Furthermore, the second electrode body 30 is disposed on the solid-electrolyte layer 20. Specifically, the second electrode layer (also referred to as a negative-electrode layer) 34 constituting the second electrode body 30 is disposed in contact with the top surface of the solid-electrolyte layer 20. Moreover, a second current collector (negative-electrode current collector) 31 exposed from a second opening 35, which is formed at the center of the second insulating member 32, is disposed in contact with the top surface of the second electrode layer 34.

Hereinafter, the first electrode layer 14, the solid-electrolyte layer 20, and the second electrode layer 34 may be collectively referred to as a powder layer P if necessary.

In the powder layer P, the solid-electrolyte layer 20 has the largest outside diameter and the first electrode layer 14 has the smallest diameter in plan view. In other words, as shown in FIG. 1, the side end faces of the first electrode layer 14 and the second electrode layer 34 are located inside the side end face of the solid-electrolyte layer 20. This considerably reduces the possibility of direct contact between the first electrode layer 14 and the second electrode layer 34 even if the electrode layers are slightly shifted by a positioning error during actual production, thereby substantially preventing the occurrence of short circuits. The distance does not need to be increased more than necessary. Specifically, the powder layer P including the three layers has the largest thickness at the center and a small thickness on the edge. Thus, if the powder layer P is pressed with a high pressure while being held with a press pin made of a high hardness metal, the pressure is supported by the thickest part and a large force is not applied to the edge. In other words, the adhesion between grains of powder becomes insufficient on the edge that receives a low pressure, increasing the risk of damage to the layer structure due to an impact or deformation of the current collector. Thus, a distance from the side end face of the solid-electrolyte layer 20 to the side end face of the first electrode layer 14 or the second electrode layer 34 is preferably 6 mm or less.

Furthermore, the first bonding layer 2 is provided for bonding the first insulating member 12 to the first current collector 11, and a second bonding layer 3 is provided for bonding the second insulating member 32 to the second current collector 31. Moreover, a third bonding layer 4 is provided for bonding the first insulating member 12 and the second insulating member 32. The first bonding layer 2, the second bonding layer 3, and the third bonding layer 4 are all disposed around the powder layer P and thus have third to fifth openings 5 to 7 at the respective centers.

In this configuration, the second electrode body 30 is pressed and stacked on the first electrode body 10. Thus, the dimensions of the electrode layers 14 and 34, the dimensions of the current collectors 11 and 31, and the inside dimensions of the insulating members 12 and 32 disposed on the edges of the current collectors 11 and 31, that is, the dimensions of the openings 15 and 35 provided on the insulating members 12 and 32 are determined as follows: The all-solid-state secondary battery 1 of the present embodiment is circular in plan view and thus the specific dimensions are expressed as a diameter or a radius. In the following explanation, the members are stacked in a state in which the centers are aligned.

In other words, as shown in FIG. 1, the inner side end of the first insulating member 12 (the inner surface of the first opening 15) is in contact with the side end of the first electrode layer 14 or the solid-electrolyte layer 20. Moreover, the inner side end of the second insulating member 32 (the inner surface of the second opening 35) is in contact with the side end of the powder layer P (particularly the solid-electrolyte layer 20) or is separated from the side end of the powder layer P by a predetermined distance. In the present embodiment, a difference between the radius of the second opening 35 of the second insulating member 32 and the radius of the outer edge of the powder layer P (particularly the solid-electrolyte layer 20) is 0 mm. In other words, the second opening 35 and the powder layer P are in contact with each other.

As described above, the inside diameter of the second opening 35 and the outside diameter of the solid-electrolyte layer 20 are substantially equal to each other. This can minimize an area less susceptible to a pressure (unpressurized area) outside the first electrode layer 14, thereby suppressing the occurrence of internal short-circuits.

In consideration of the accuracy of positioning for the application of the powder layer P during production, a difference between the radius of the second opening 35 and the radius of the outer edge of the solid-electrolyte layer 20 is set as large as a positioning tolerance (e.g., 0 to 2 mm). This can prevent the solid-electrolyte layer 20 from being held between the third bonding layer 4 and the second composite current collecting member 33, precluding faulty bonding.

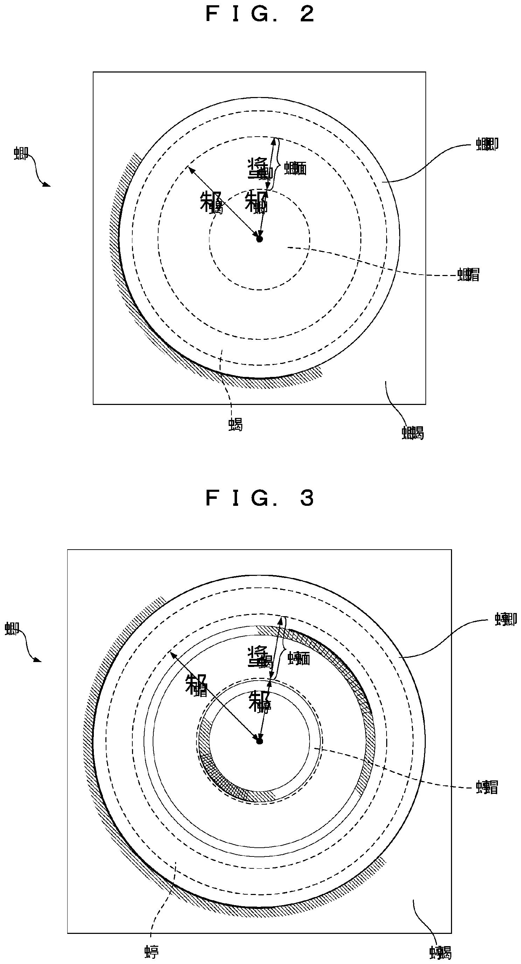

The first bonding layer 2 is separated from the inner side end of the first insulating member 12 (the inner surface of the first opening 15) by a predetermined distance so that the current collector 11 has the deformable distortion buffering area 16 that is unfixed to the insulating members between the first bonding layer 2 and the inner side end of the first insulating member 12. And the second bonding layer 3 is separated from the inner side end of the second insulating member 32 (the inner surface of the second opening 35) by a predetermined distance so that the current collector 31 has the deformable distortion buffering area 36 that is unfixed to the insulating members between the second bonding layer 3 and the inner side end of the second insulating member 32. The predetermined distance is a distance from the inner side end of the first insulating member 12 to the inner side end of the first bonding layer 2 in the distortion buffering area 16, whereas the predetermined distance is a distance from the inner side end of the second insulating member 32 to the inner side end of the second bonding layer 3 in the distortion buffering area 36. More specifically, the predetermined distance is a difference d₁ between an inner radius r₁ of the first insulating member 12 and an inner radius r₂ of the first bonding layer 2 in FIG. 2. In FIG. 3, the predetermined distance is a difference d₂ between an inner radius r₃ of the second insulating member 32 and an inner radius r₄ of the second bonding layer 3. The predetermined distance preferably ranges from 1 to 15 mm. The preferable range of the predetermined distances of the distortion buffering areas 16 and 36 does not change according to the dimensions of the all-solid-state secondary battery 1. In the present embodiment, the all-solid-state secondary battery 1 has an outside diameter of about 30 to 300 mm and a thickness of about 50 to 500 µm.

The materials of the members constituting the all-solid-state secondary battery 1 will be described below.

The first current collector 11 and the second current collector 31 are thin plates or foil members that are made of copper (Cu), magnesium (Mg), stainless steel, titanium (Ti), iron (Fe), cobalt (Co), nickel (Ni), zinc (Zn), aluminum (Al), germanium (Ge), indium (In), lithium (Li), tin (Sn), or an alloy thereof. The thin plates and foil members are 5 to 100 µm in thickness. In the present embodiment, the first current collector (positive electrode) 11 is aluminum foil and the second current collector (negative electrode) 31 is copper foil. Moreover, the surfaces of the first current collector 11 and the second current collector 31 are preferably roughened in view of improvement in adhesion to the powder layer P. Roughening is processing for increasing surface roughness by etching or the like. In the present embodiment, the first current collector 11 is aluminum foil subjected to etching (also referred to as etched aluminum foil) and the second current collector 31 is etched copper foil (roughened copper foil). The insulating members 12 and 32 are plate members composed of polymeric materials such as a PET film.

By using the etched current collectors, a pressure for producing the all-solid-state secondary battery 1 fills holes formed by etching, facilitating engagement with the electrode layers 14 and 34. This encourages the integration of the current collectors and the electrode layers.

The electrode layers 14 and 34 are made of a mixture of, with a predetermined ratio, an electrode active material that ensures an electron conduction path among particles in order to make an oxidation-reduction reaction for delivering and receiving electrons, and a solid electrolyte having ion conductivity. The solid electrolyte having lithium-ion conductivity is mixed with the electrode active material, thereby providing ion conductivity in addition to electron conductivity. This ensures the ion conduction path among particles.

The electrode (positive electrode) active material suitable for the first electrode layer (positive-electrode layer) 14 is not particularly limited as long as the material enables the insertion and departure of lithium ions. For example, the positive-electrode active material may be selected from layered oxides such as a lithium-nickel complex oxide (LiNiₓM₁₋ₓO₂, M is at least one element selected from Co, Al, Mn, V, Cr, Mg, Ca, Ti, Zr, Nb, Mo and W), lithium cobalt oxide (LiCoO₂), lithium nickel oxide (LiNiO₂), and lithium manganese oxide (LiMn₂O₄), a solid solution or a mixture of, for example, lithium iron phosphate (LiFePO₄) having an olivine structure and lithium manganese oxide (LiMn₂O₄, Li₂MnO₂, LiMO₂) having a Spinel structure, and sulfides of, for example, sulfur (S) or lithium sulfide (Li₂S). Specifically, the positive-electrode active material is a lithium-nickel-cobalt-aluminum complex oxide (LiNi_{0.8}Co_{0.15}Al_{0.05}O₂, hereinafter may be referred to as an NCA complex oxide) in the present embodiment.

The electrode (negative electrode) active material suitable for the second electrode layer (negative-electrode layer) 34 is, for example, a carbon material, e.g., a natural graphite, a synthetic graphite, a graphite carbon fiber, and a resin baked carbon, or an alloy material mixed with a solid electrolyte. The alloy material is, for example, a lithium alloy (LiAl, LiZn, Li₃Bi, Li₃Cd, Li₃Sb, Li₄Si, Li_{4.4}Pb, Li_{4.4}Sn, Li_{0.17}C, LiC₆ or the like), lithium titanate (Li₄Ti₅O₁₂), or a metal oxide of Zn or the like. In the present embodiment, the negative-electrode active material is natural or synthetic graphite.

The surfaces of the positive-electrode active material and the negative-electrode active material may be coated with zirconia (ZrO₂), alumina (Al₂O₃), lithium titanate (Li₄Ti₅O₁₂), lithium niobate (Li₄NbO₃), and carbon (C) or the like as electrode active materials.

Solid electrolytes are roughly classified into organic polymer electrolytes (also referred to as organic solid electrolytes) and inorganic solid electrolytes. Any one of the electrolytes may be used. Inorganic solid electrolytes are roughly classified into oxide materials and sulfide materials. Any one of the materials may be used. Moreover, a crystalline or amorphous inorganic solid electrolyte may be optionally selected. In other words, a solid electrolyte can be optionally selected from materials including an organic compound, an inorganic compound, and a mixture of the compounds. More specifically, materials usable as solid electrolytes include, for example, lithium-containing metal oxides (at least one metal) such as Li₂-SiO₂ and Li₂-SiO₂-P₂O₅, a lithium-containing metal nitride such as LiₓP_{y}O_{1-z}N₂, lithium-containing sulfide glass including substances such as Li₂S-P₂S₅, Li₂S-SiS₂, Li₂S-B₂S₃, Li₂S-GeS₂, Li₂S-SiS₂-Lil, Li₂S-SiS₂-Li₃PO₄, Li₂S-Ge₂S₂, Li₂S-GeS₂-P₂S₅, and Li₂S-GeS₂-ZnS, PEO (polyethylene oxide), PVDF (polyvinylidene difluoride), lithium phosphate (Li₃PO₄), and a lithium-containing transition-metal oxide such as a lithium titanium oxide. In the present embodiment, Li₂S-P₂S₅ glass is selected as a solid electrolyte from sulfide inorganic-solid electrolytes based on sulfide glass having high ion conduction.

The solid electrolyte suitable for the solid-electrolyte layer 20 may be identical to or different from the solid electrolyte used for the first electrode layer 14 and the second electrode layer 34.

The current collectors 11 and 31 and the insulating members 12 and 32 are bonded by known bonding methods such as heat seal and pressure-sensitive contact. Any liquid or solid material may be used for bonding. In the present embodiment, the bonding layers 2, 3, and 4 are made of pressure-sensitive adhesive for ease of handling.

Typically, the current collectors 11 and 31 of the all-solid-state secondary battery 1 are pressurized to extend, causing wrinkles on the current collectors 11 and 31. As the wrinkles become deeper, the wrinkles extend into the powder layer P so as to break the powder layer P, causing an internal short-circuit.

However, in the all-solid-state secondary battery 1 having the foregoing configuration, in particular, the distortion buffering areas 16 and 36, gentle deformation such as an undulation and a wrinkle is caused to occur spontaneously when a pressure is applied to the all-solid-state secondary battery 1, thereby suppressing the extension into the powder layer P. Specifically, the distortion buffering areas 16 and 36 are not bonded (fixed) to the current collectors 11 and 31 and thus can slide on the insulating members 12 and 32 when the current collectors are extended by pressurization. Thus, deformation such as an undulation and a wrinkle can be gently made (dispersed) by extension, thereby suppressing the occurrence of local deep wrinkles. This can pressurize the powder layer P without causing any damage, suppressing internal short-circuits in the battery. Hence, deformation such as distortion and warpage can be suppressed in the overall battery during and after pressure molding.

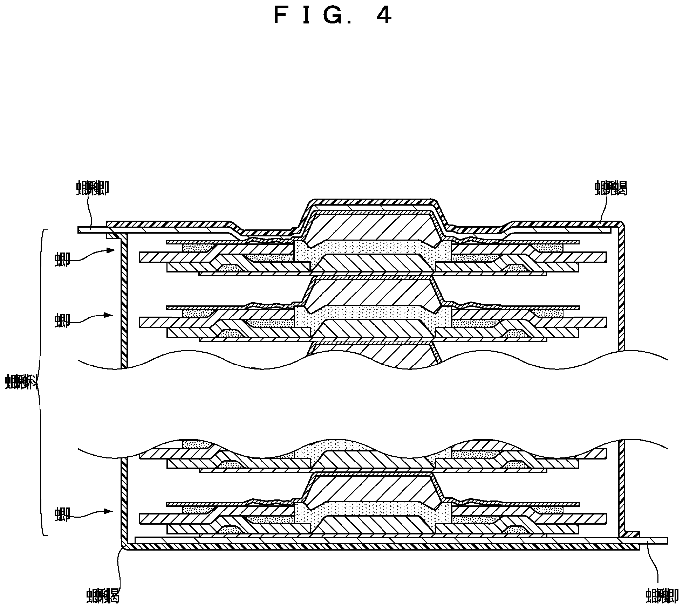

For some purposes, as shown in FIG. 4, a so-called layered all-solid-state secondary battery 100 can be produced to satisfy a desired output voltage or a desired battery capacity. In the all-solid-state secondary battery 100, the all-solid-state secondary batteries 1, each of which has the foregoing configuration, are stacked as individual cells connected in parallel or in series. FIG. 4 shows the batteries stacked in series. The all-solid-state secondary battery 100 is packed with a laminate 102 having tab leads 101 for bringing out electron. In this case, if a curved battery is forcibly flattened to be stacked, the powder layer P may be broken and cause an internal short-circuit. When the battery is stacked, a stiffener for suppressing the curve is not practically used because the weight and volume of the stiffener reduce an energy density by weight or by volume. However, according to the all-solid-state secondary battery 1, deformation such as distortion and warp hardly occurs over the battery 1 during and after pressure molding, facilitating the production of the layered all-solid-state secondary battery 100. Also when the all-solid-state secondary battery 1 of the present embodiment is used as the layered all-solid-state secondary battery 100, the occurrence of internal short-circuits can be suppressed.

A method of manufacturing the all-solid-state secondary battery 1 will be simply described below.

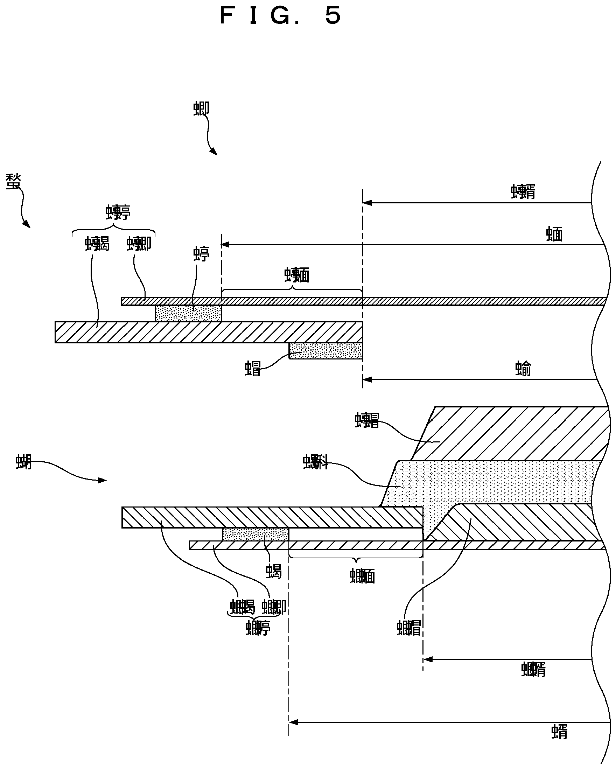

As shown in FIG. 5, the first composite current collecting member 13 and the second composite current collecting member 33 are first assembled. The first composite current collecting member 13 and the second composite current collecting member 33 are identical in configuration and thus are assembled by the same method.

Specifically, the first insulating member 12 having the first opening 15 at the center and the second insulating member 32 having the second opening 35 are bonded to the surfaces of the first current collector 11 and the second current collector 31 along the circumferences of the current collectors via the first bonding layer 2 and the second bonding layer 3. At this point, the first current collector 11 and the second current collector 31 are exposed at the positions of the first opening 15 and the second opening 35.

Subsequently, the first electrode layer 14 is formed by depositing electrode mixture powder as the material of the first electrode layer 14 on the surface of the first current collector 11 in the opening 15 of the first composite current collecting member 13. Then, the solid-electrolyte layer 20 is formed by depositing solid electrolyte powder on the first electrode layer 14. The second electrode layer 34 is formed by depositing electrode mixture powder as the material of the second electrode layer 34 on the surface of the solid-electrolyte layer 20. Hereinafter, the laminate will be referred to as a main laminate X. The powder is deposited using a known method, e.g., coating.

The third bonding layer 4 is provided on the surface of the second insulating member 32 of the second composite current collecting member 33 (the surface where the second current collector 31 is not bonded). Hereinafter, the laminate will be referred to as a sub laminate Y.

The stacked main laminate X and sub laminate Y are pressed to be bonded to each other via the third bonding layer 4, completing the battery. The laminates are pressed in two steps.

Specifically, the sub laminate Y is first placed on the top surface of the main laminate X via the third bonding layer 4, and then a small pressure is applied as a temporary press onto the sub laminate Y from above with a press pin. In the temporary press, an elastic member provided near the press pin gradually pushes air out of the laminates, bringing the laminates into contact with each other. It is apparent that the second current collector 31 is deformed along the surface shape of the second electrode layer 34 via the elastic member, the third bonding layer 4 provided on the second composite current collecting member 33 is bonded onto the first composite current collecting member 13, and the second current collector 31 covers the main laminate X. In other words, the composite current collecting members 13 and 33 seal the powder layer P.

Then, a larger pressure is applied as a main press onto the laminates X and Y from above in this state, firmly integrating the laminates. At this point, the powder layer P is pressed into the surfaces of the current collectors 11 and 31, thereby improving electric conductivity.

When the pressure is removed after the completion of the main press, the powder layer P expands upward and stretches laterally. However, the powder layer P is pressed into the surfaces of the current collectors 11 and 31 and thus the current collectors 11 and 31 are laterally (outward) pulled by a stretching force, causing deformation such as wrinkles around the electrode layers 14 and 34. The deformation is absorbed by the distortion buffering areas 16 and 36 provided around the electrode layers 14 and 34. This prevents the powder layer P from being broken on the edges of the electrode layers 14 and 34, suppressing the occurrence of internal short-circuits in the battery.

Example 1, comparative example 1, and example 2 according to the present invention will be described below. Example 1, comparative example 1, and example 2 were carried out in an atmosphere of nitrogen at a dew point of -70°C or lower.

### Example 1

First, the first composite current collecting member 13 was assembled using the first current collector 11 that was circular in plan view with a diameter of 66 mm, the first insulating member 12 that was square in plan view with a side of 70 mm, and the first bonding layer 2 that was circular in plan view with an outside diameter of 64 mm and an inside diameter of 60 mm. The first insulating member 12 had the first opening 15 that was circular in plan view with a diameter of 52 mm. Moreover, the second composite current collector 33 was assembled using the second current collector 31 that was circular in plan view with a diameter of 70 mm, the second insulating member 32 that was a square in plan view with a side of 80 mm, and the second bonding layer 3 that was circular in plan view with an outside diameter of 60 mm and an inside diameter of 54 mm. The second insulating member 32 had the second opening 35 that was circular in plan view with a diameter of 54 mm.

In this configuration, the first current collector 11 was roughened aluminum foil having a thickness of 20 µm and the second current collector 31 was roughened copper foil having a thickness of 18 µm. The insulating members 12 and 32 were PET films having a thickness of 50 µm. The bonding layers 2, 3, and 4 were pressure-sensitive contact films (double-sided adhesive tape) having a thickness of 30 µm.

Subsequently, the first electrode mixture was applied (deposited) on the first current collector 11 exposed from the first opening 15 of the first composite current collecting member 13, forming the first electrode layer 14 that was circular in plan view with a diameter of 50 mm. Then, solid electrolyte powder was applied (deposited) on the first electrode layer 14, forming the solid-electrolyte layer 20 that was circular in plan view with a diameter of 54 mm. Then, the second electrode mixture was applied (deposited) on the solid-electrolyte layer 20, forming the second electrode layer 34 that was circular in plan view with a diameter of 52 mm.

In this configuration, the first electrode mixture was a 7:3 mixture of NCA complex oxide acting as a positive-electrode active material and Li₂S (80 mol%)-P₂S₅ (20 mol%) glass ceramic acting as a solid electrolyte. Furthermore, the second electrode mixture was a 6:4 mixture of graphite powder acting as a negative-electrode active material and Li₂S (80 mol%) -P₂S₅ (20 mol%) glass ceramic acting as a solid electrolyte. The solid electrolyte of the solid-electrolyte layer 20 was Li₂S (80 mol%) -P₂S₅ (20 mol%) glass ceramic.

The powder of the first electrode mixture, the solid electrolyte, and the second electrode mixture was applied by electrostatic screen printing. The amount of the applied first electrode layer 14 was 23 mg/cm², the amount of the applied second electrode layer 34 was 30 mg/cm², and the amount of the applied solid electrolyte was 14 mg/cm². The amount of application may be optionally changed according to a desired thickness of the pressure-molded layer. In example 1, the first electrode layer 14 was about 70 µm in thickness, the second electrode mixture layer 34 was about 130 µm, and the solid-electrolyte layer was about 90 µm in thickness.

The third bonding layer 4 for bonding the first composite current collecting member 13 and the second composite current collecting member 33 was provided on the surface of the second composite current collecting member 33, that is, the surface not in contact with the second current collector 31. The third bonding layer 4 was annular in plan view with an outside diameter of 68 mm and an inside diameter of 64 mm.

The second composite current collecting member 33 was stacked such that the third bonding layer 4 was in contact with the second electrode layer 34. A pressure was applied by using a pressing member 51 from the second composite current collecting member 33 side via an elastic member 52, producing the all-solid-state secondary battery 1. In other words, in example 1, the first current collector 11 had the distortion buffering area 16 of 8 mm and the second current collector 31 had the distortion buffering area 36 of 10 mm. At this point, the applied pressure was 10 ton/cm² and the pressing time was 30 seconds.

The pressurized all-solid-state secondary battery 1 was held by a pair of stainless plates, each having a side of 70 mm and a thickness of 0.3 mm. The all-solid-state secondary battery 1 was then held between lamination films having tab leads for bringing out electricity. The edges of the films were heat-sealed in a vacuum, so that the all-solid-state secondary battery 1 was packed with the lamination films.

All-solid-state secondary batteries 1 identical to this configuration were produced.

For the all-solid-state secondary batteries 1, the presence or absence of a short circuit was decided from an initial electromotive force by measuring a voltage between the tab leads for bringing out electricity with a tester. Generally, a normal battery has an electromotive force of 0.4 to 0.6 V and thus the presence of a short circuit was decided if the electromotive force of the battery is lower than 0.2 V. As a result, two of the batteries had initial electromotive forces of less than 0.2 V and the occurrence of short circuits was recognized. However, the rate of occurrence of internal short-circuits was 10%, thus, it can be seen that the occurrence of internal short-circuits was considerably suppressed.

### Comparative Example 1

As comparative example 1, an all-solid-state secondary battery was produced as will be discussed below. Comparative example 1 is different from example 1 only in the dimensions of members. Specifically, comparative example 1 is identical to example 1 except for the materials of the members, thicknesses, a method of evaluating the presence or absence of short circuits, which will be discussed below.

First, the first composite current collecting member 13 was assembled using the first current collector 11 that was circular in plan view with a diameter of 64 mm, the first insulating member 12 that was square in plan view with a side of 70 mm, and the first bonding layer 2 that was circular in plan view with an outside diameter of 62 mm and an inside diameter of 58 mm. The first insulating member 12 had the first opening 15 that was circular in plan view with a diameter of 58 mm that was equal to the inside diameter of the first bonding layer 2. Moreover, the second composite current collecting member 33 was assembled using the second current collector 31 that was circular in plan view with a diameter of 70 mm, the second insulating member 32 that was square in plan view with a side of 80 mm, and the second bonding layer 3 that was circular in plan view with an outside diameter of 66 mm and an inside diameter of 62 mm. The second insulating member 32 had the second opening 35 that was circular in plan view with a diameter of 62 mm that was equal to the inside diameter of the second bonding layer 3.

Subsequently, the first electrode mixture was applied (deposited) on the first current collector 11 exposed from the first opening 15 of the first composite current collecting member 13, forming the first electrode layer 14 having a diameter of 50 mm. Then, the solid electrolyte was applied (deposited) on the first electrode layer 14, forming the solid-electrolyte layer 20 having a diameter of 58 mm. Then, the second electrode mixture was applied (deposited) on the solid-electrolyte layer 20, forming the second electrode layer 34 having a diameter of 54 mm.

The third bonding layer 4 for bonding the first composite current collecting member 13 and the second composite current collecting member 33 was provided on the surface of the second composite current collecting member 33, that was, the surface not in contact with the second current collector 31. The third bonding layer 4 was annular in plan view with an outside diameter of 66 mm and an inside diameter of 62 mm.

The second composite current collecting member 33 was stacked such that the third bonding layer 4 was in contact with the second electrode layer 34. A pressure is applied by using the pressing member 51 from the second composite current collecting member 33 side via the elastic member 52, producing the all-solid-state secondary battery 1. In other words, in the all-solid-state secondary battery 1 of the comparative example, the diameter of the first opening 15 is equal to the inside diameter of the first bonding layer 2 and the diameter of the second opening 35 is equal to the inside diameter of the second bonding layer 3. Thus, the current collectors 11 and 31 are not provided with the distortion buffering areas 16 and 36. Thirteen all-solid-state secondary batteries 1 identical to this configuration were produced. Ten of the all-solid-state secondary batteries 1 had internal circuits. Specifically, the rate of occurrence of internal short-circuits was 77%, thus, it can be seen that that the occurrence of internal short-circuits was not suppressed.

### Example 2

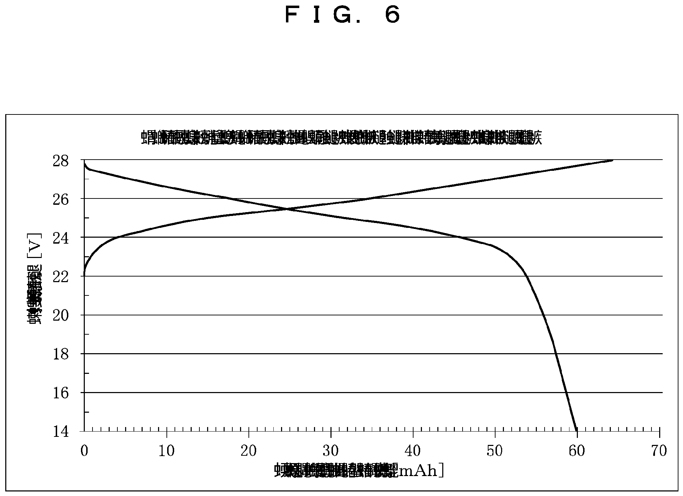

Seven all-solid-state secondary batteries 1 identical to those of example 1 were produced as individual cells. The seven all-solid-state secondary batteries 1 were stacked in series and then were packed with lamination film, producing the layered all-solid-state secondary battery 100. FIG. 6 shows the charging/discharging curves of the all-solid-state secondary batteries 1. As shown in FIG. 6, it can be seen that the layered all-solid-state secondary battery 100 operated normally.

### Modification

In the foregoing embodiment, the first electrode body 10 is the positive-electrode body disposed on the underside. The first electrode body 10 may be a negative-electrode body disposed on the underside.

In the present embodiment, the solid-electrolyte layer 20 is larger than the first electrode layer 14 and the second electrode layer 34. The solid-electrolyte layer 20 may be larger than at least one of the first electrode layer 14 and the second electrode layer 34.

In the present embodiment, the all-solid-state secondary battery 1 is circular in plan view. The shape of the all-solid-state secondary battery 1 is not limited. For example, if the all-solid-state secondary battery 1 is polygonal in plan view, the opening may be also polygonal. Alternatively, the all-solid-state secondary battery 1 and the openings 15 and 35 of the insulating members 12 and 32 may have different shapes in plan view. The dimension of the polygonal shape in plan view is a maximum value of distances from the center of gravity to the vertexes of the polygonal shape. If the polygonal shape is a quadrangle in plan view and the powder layer P is rectangular in plan view, the dimensions of the solid-electrolyte layer, the first electrode layer, and the second electrode layer are specified by the inner areas surrounded by the outer edges.

In the case of the polygonal shape in plan view, the corners of the powder layer P may be chamfered to further suppress internal short-circuits in the battery. The corners may be chamfered in at least one of planar and curved fashions. The chamfering is performed by a known method. For example, a pressure is applied to the powder layer P so as to mold only the powder layer P, and then the corners are rounded with a tool, e.g., sandpaper.

## Claims

1. An all-solid-state secondary battery comprising:
a positive or negative first electrode body having a first composite current collecting member and a first electrode layer; and
a negative or positive second electrode body having a second composite current collecting member and a second electrode layer,
the first composite current collecting member having a plate-like first current collector and a plate-like first insulating member bonded to an edge of a surface of the first current collector via a first bonding layer,
the first electrode layer being stacked on the surface of the first current collector and inside the first insulating member,
the second composite current collecting member having a plate-like second current collector and a plate-like second insulating member bonded to an edge of a surface of the second current collector via a second bonding layer,
the second electrode layer being stacked on the surface of the second current collector and inside the second insulating member,
the all-solid-state secondary battery further comprising a solid-electrolyte layer disposed between the first electrode layer and the second electrode layer,
the solid-electrolyte layer having a side end face disposed outside at least one of side end faces of the first electrode layer and the second electrode layer,
the bonding layers being separated from respective inner side ends of the insulating members such that each of the current collectors has a deformable distortion buffering area.

2. The all-solid-state secondary battery according to claim 1, wherein at least one of the first insulating member and the second insulating member has the inner side end in contact with the side end face of the solid-electrolyte layer.

3. The all-solid-state secondary battery according to claim 2, wherein a distance from the side end face of the solid-electrolyte layer to the side end face of one of the first electrode layer and the second electrode layer is up to 6 mm.

4. The all-solid-state secondary battery according to any one of claims 1 to 3, wherein a clearance between the bonding layer and the inner side end of the insulating member in each of the composite current collecting members ranges from 1 to 15 mm.

5. The all-solid-state secondary battery according to any one of claims 1 to 3, wherein the first current collector and the second current collector have roughened surfaces.

6. An all-solid-state secondary battery comprising a plurality of stacked all-solid-state-secondary batteries, each being configured according to any one of claims 1 to 3.
